(19) Europäisches Patentamt / European Patent Office / Office européen des brevets

(11) **EP 3 546 882 B1**

(12) **EUROPEAN PATENT SPECIFICATION**

(45) Date of publication and mention
of the grant of the patent:
**16.12.2020 Bulletin 2020/51**

(51) Int Cl.:
**G01B 11/00** *(2006.01)*   **G05D 1/02** *(2020.01)*
**G06F 3/0354** *(2013.01)*

(21) Application number: **19159488.6**

(22) Date of filing: **26.02.2019**

(54) **MOVING AMOUNT DETECTION DEVICE**

BEWEGUNGSMENGENDETEKTIONSVORRICHTUNG

DISPOSITIF DE DÉTECTION DE QUANTITÉ DE DÉPLACEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2018 JP 2018060075**

(43) Date of publication of application:
**02.10.2019 Bulletin 2019/40**

(73) Proprietor: **TOYOTA JIDOSHA KABUSHIKI
KAISHA**
**Toyota-shi, Aichi-ken 471-8571 (JP)**

(72) Inventor: **YABUSHITA, Hidenori**
**Toyota-shi, Aichi-ken, 471-8571 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Straße 22
85354 Freising (DE)**

(56) References cited:
JP-A- H04 151 715     US-A1- 2006 158 424
US-A1- 2012 256 837     US-B2- 8 768 558
US-B2- 9 744 670

**Description**

BACKGROUND

The present disclosure relates to a moving amount detection device.

A moving amount detection device that detects a moving amount of a moving body by using a plurality of optical sensors mounted therein is known. Japanese Unexamined Patent Application Publication No. 2015-187798 discloses a configuration in which four optical sensors such as optical mouse-type sensors are respectively mounted on the front, rear and sides of a moving body. Japanese Unexamined Patent Application Publication No. H4-151715 discloses a configuration in a moving amount detection device using an optical mouse-type sensor as an optical sensor in which four optical sensors are disposed at 90° intervals on the same circumference in the top view. Each of the optical sensors disclosed in Japanese Unexamined Patent Application Publication No. H4-151715 is capable of detecting only a moving amount in one direction, and are disposed so that directions in which the moving amounts of each of the optical sensors can be detected is tangential to the above-described circumference. The US Patent Application Publication US 2006/158424 A1, being the next-coming prior art, discloses an input device, capable of translating motions of a movable pad into a motion of a cursor on a display. The input device includes the movable pad within a frame, two linear arrays of optical sensors, which are located opposite of the movable pad and forward signals in response to light from a surface on the movable pad to a processor, which translates motions of a movable pad into a motion of a cursor on a display. The US Patent US 8 768 558 B2 shows an optical tracking vehicle control system and method, wherein the system comprises a controller as well as a spatial database, providing spatial data to the controller. This spatial data is part of the base, the controller controls a vehicle on, and another part is external spatial data. The system also shows a vehicle altitude compensation module, a position error generator and actuators to control the vehicle. The US Patent US 9 744 670 B2 discloses a system and a method for usage of optical odometry sensor systems in a mobile robot. The optical odometry sensor system includes an optical odometry camera that has a telemetric lens configured to capture images of a tracking surface below a robot. The camera is also having a range of viewing distances from a first distance directly at the robot to a second distance below the underside of the mobile robot body.

SUMMARY

When a plurality of optical sensors are used to detect a moving amount of a moving body, a moving amount of a movement in a combination of a translational movement and a rotational movement in the moving body cannot be detected accurately depending on an attachment position of each optical sensor and a direction of outputting a moving amount. Japanese Unexamined Patent Application Publication No. 2015-187798 fails to disclose the details (an attachment position and a direction of outputting a moving amount) on how each of the plurality of optical sensors are attached to a moving body. Further, Japanese Unexamined Patent Application Publication No. 2015-187798 fails to disclose how data acquired by each of the optical sensors is used to detect a moving amount and a position of the moving body.

On the other hand, Japanese Unexamined Patent Application Publication No. H4-151715 discloses attachment conditions of each optical sensor and a method for detecting a moving amount and a position of a moving body as described above. However, in the moving amount detection device disclosed in Japanese Unexamined Patent Application Publication No. H4-151715, it is necessary that the four optical sensors be disposed at 90° intervals on the same circumference and a reference position detecting a moving amount be set to the center of the same circumference in which each of the optical sensors is disposed. Thus, the flexibility in positions where the optical sensors are disposed is low.

The aforementioned object is solved by the independent claim while advantageous additions are content of the dependent claim.

The present disclosure is made in view of the above background and provides a moving amount detection device capable of accurately detecting a moving amount of a movement in a combination of a translational movement and a rotational movement in the moving body, and improving a flexibility in positions where optical sensors are disposed.

A first exemplary aspect is a moving amount detection device including: a plurality of at least three of optical sensors having a light source for irradiating a floor surface where a moving body is located, the plurality of optical sensors acquiring image data of the floor surface; a moving amount acquisition unit configured to acquire a moving amount of the moving body in a one-axial or two-axial predetermined coordinate system by using the image data acquired from the optical sensors; and an arithmetic processing unit configured to detect the moving amount of the moving body in a coordinate system of a reference position on the moving body by performing arithmetic processing using the moving amount of the moving body in the predetermined coordinate systems in each of the plurality of optical sensors acquired by the moving amount acquisition unit, in which the plurality of optical sensors are disposed so that three or more of them are not arranged on the same straight line in a top view of the moving body and the predetermined coordinate systems that are respectively set in the plurality of optical sensors have angles different from each other with respect to the coordinate system in the reference position, and the arithmetic processing unit detects the moving amount of the moving body in the coordinate system of the reference position by repeatedly performing arithmetic processing of converting the moving amount of the moving body in each of the plurality of optical sensors in the predetermined coordinate systems that are respectively set in the plurality of optical sensors into the moving amount of the moving body in the coordinate system of the reference position and integrating the converted moving amount.

In a top view of a moving body, three or more of a plurality of optical sensors are disposed so as not to be arranged on the same straight line, and thereby variations in sensitivity among the plurality of optical sensors can be suppressed with respect to a translational movement. Further, the predetermined coordinate systems respectively set in the plurality of the optical sensors are disposed so as to have angles different from each other with respect to a coordinate system of a reference position so that variations in sensitivity among the plurality of optical sensors can be suppressed with respect to a rotational movement. Variations in sensitivity among a plurality of optical sensors can be thereby suppressed with respect to both translational and rotational movements.

Further, the plurality of optical sensors are disposed on a circumference in which the coordinate center of the predetermined coordinate systems respectively set in the plurality of optical sensors are centered around the reference position, and the plurality of optical sensors are disposed so that angles formed by the predetermined coordinate systems that are respectively set in the plurality of optical sensors and the coordinate system in the reference position are shifted by an angle obtained by dividing 90° by the number of the plurality of optical sensors.

Sensitivity of the plurality of optical sensors depends on a distance of them from the reference position. When a plurality of optical sensors are disposed on the same circumference in which the coordinate centers of predetermined coordinate systems respectively set in the optical sensors are centered around a control center as a reference position, the sensitivity of each of the optical sensors can be uniform. Further, when a plurality of optical sensors are disposed so that angles formed by the predetermined coordinate systems respectively set in the plurality of optical sensors and a coordinate system of a reference position are shifted by an angle obtained by dividing 90° by the number of the plurality of optical sensors, variations in sensitivity in a rotational movement can be further suppressed.

Further, the moving amount detection device further includes a control unit configured to control so as to reduce a displacement amount between a current position of the moving body calculated by using a moving amount of the reference position in the arithmetic processing unit and a point closest to the current position on a planned moving path of the moving body, the planned moving path being planned in advance.

In this manner, the moving body can autonomously move along the planned moving path.

According to the present disclosure, in a moving body, a moving amount of a movement in a combination of a translational movement and a rotational movement can be detected accurately, and a flexibility in positions where optical sensors are disposed can be improved.

The above and other objects, features and advantages of the present disclosure will become more fully understood from the detailed description given hereinbelow and the accompanying drawings which are given by way of illustration only, and thus are not to be considered as limiting the present disclosure.

BRIEF DESCRIPTION OF DRAWINGS

Fig. 1 is a schematic diagram showing a configuration of a moving body incorporating a moving amount detection device according to an embodiment;

Fig. 2 is a schematic diagram showing an example of an arrangement of a plurality of optical sensors in a moving body incorporating a moving amount detection device according to the embodiment;

Fig. 3 is a schematic diagram showing an example in which in the case where a plurality of optical sensors are one-axial sensors that detect a moving amount in one coordinate axis direction, the arrangement of each of the optical sensors is the same as an arrangement (Fig. 2) in the case where the plurality of optical sensors are two-axial sensors;

Fig. 4 shows an arrangement of a plurality of optical sensors in a moving body of a comparative example 1;

Fig. 5 shows an arrangement of a plurality of optical sensors in a moving body of a comparative example 2;

Fig. 6 shows an arrangement of a plurality of optical sensors in a moving body of a comparative example 3;

Fig. 7 is a schematic diagram showing an example (a modified example 1), which is different from Fig. 2, of an arrangement of a plurality of optical sensors 2 in the moving body incorporating a moving amount detection device according to the embodiment; and

Fig. 8 is a schematic diagram showing an example (a modified example 2) of an arrangement in the case where the number of a plurality of optical sensors in the moving body is four.

DESCRIPTION OF EMBODIMENTS

Hereinafter, although the present disclosure will be described with reference to embodiments of the disclosure, the present disclosure according to claims is not limited to the following embodiment. Further, not all the configurations described in this embodiment are necessary as the means for solving the problem.

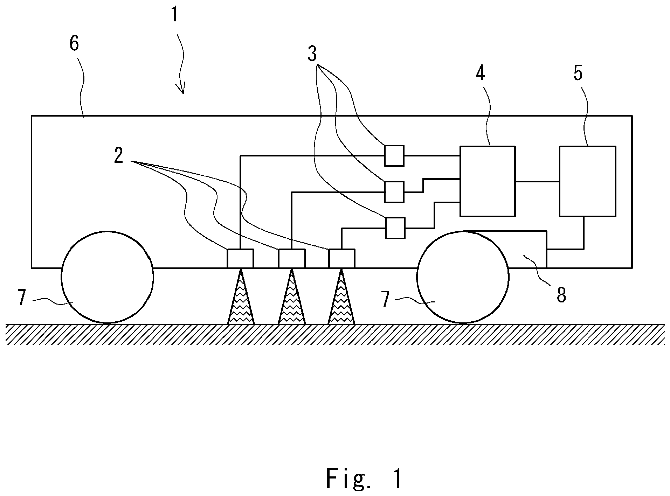

First, a schematic configuration of a moving body 1 incorporating a moving amount detection device according to this embodiment is described with reference to Fig. 1. Fig. 1 is a schematic diagram showing a configuration of the moving body 1 incorporating a moving amount detection device according to this embodiment. As shown in Fig. 1, the moving body 1 includes a plurality of at least three of optical sensors 2, a moving amount acquisition unit 3, and an arithmetic processing unit 4, which are components for configuring a moving amount detection unit. The optical sensors 2, the moving amount acquisition unit 3, and the arithmetic processing unit 4 are disposed inside a housing 6.

The optical sensors 2 include a light source that irradiates a floor surface where a moving body 1 is located, and acquires image data of the floor surface. The optical sensors 2 are, for example, optical mouse-type sensors. The light source of the optical sensors 2 is, for example, a laser light or an LED (Light Emitting Diode). Details of an arrangement of the plurality of optical sensors 2 in the moving body 1 will be described later.

The moving amount acquisition unit 3 uses image data acquired from the optical sensors 2 to acquire a moving amount of the moving body in a one-axial or two-axial predetermined coordinate system. The moving amount acquisition unit 3 includes an amplifier or the like that amplifies signals from the optical sensors 2.

The arithmetic processing unit 4 performs arithmetic processing by using moving amounts in the respective predetermined coordinate systems of the plurality of optical sensors 2, which are acquired by the moving amount acquisition unit 3, and thereby detects a moving amount of the moving body in the coordinate system of the reference position on the moving body.

The moving body 1 includes wheels 7, and a drive unit 8 including a motor connected to the wheels 7 and a battery for driving the motor is provided inside the housing 6. This motor in the drive unit 8 is driven so that the wheels 7 rotate to move the moving body 1. The moving body 1 may further include a control unit 5 that controls the drive unit 8 so as to reduce a displacement amount between a current position of the moving body 1 calculated by using a moving amount of the reference position in the arithmetic processing unit 4 and a point closest to the current position on a planned moving path of the moving body 1, the planned moving path being planned in advance. In this manner, the moving body 1 can autonomously move along the planned moving path.

The arithmetic processing unit 4 and the control unit 5 are arithmetic processing devices including a CPU (Central Processing Unit), a ROM (Read Only Memory), RAM (Random Access Memory), a communication interface, and the like. Further, the arithmetic processing unit 4 and the control unit 5 may include a HDD, an optical disk, or an optical magnetic disk, which are detachable, for storing various programs, control parameters, and the like, and supplying the programs and the data to a memory and the like as necessary. Note that the arithmetic processing unit 4 and the control unit 5 may be configured as one arithmetic unit.

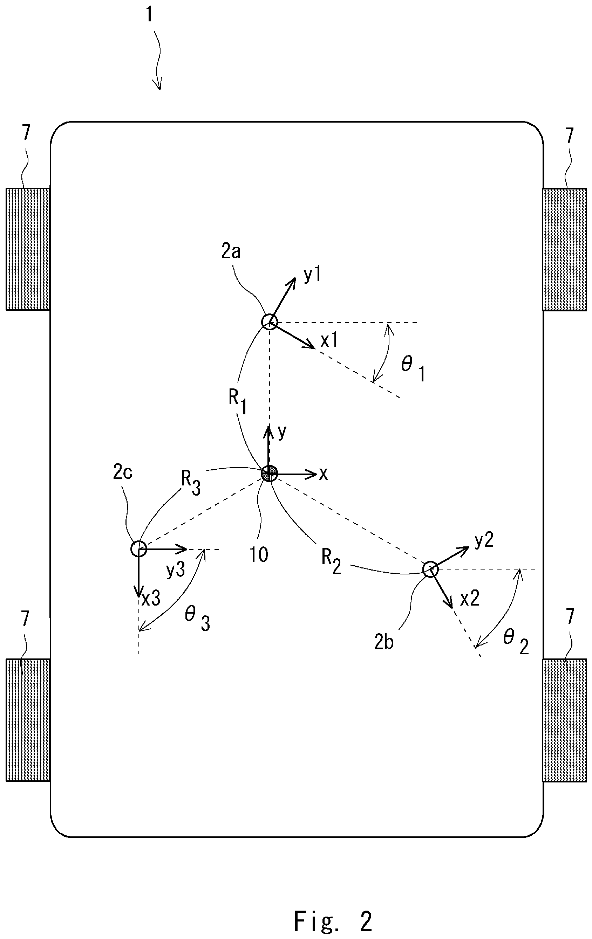

Next, an arrangement of a plurality of optical sensors 2 in the moving body 1 will be described. Fig. 2 is a schematic diagram showing an example of an arrangement of a plurality of optical sensors 2 (optical sensors 2a, 2b, and 2c) in the moving body 1. It is assumed here that the plurality of optical sensors 2a, 2b, and 2c are two-axial sensors that detect moving amounts of directions of two coordinate systems. As shown in Fig. 2, the plurality of optical sensors 2 (optical sensors 2a, 2b, and 2c) are disposed so that three or more of them are not arranged on the same straight line in a top view of the moving body 1. That is, all the optical sensors 2a, 2b, and 2c are disposed so as not to be arranged on the same straight line.

Further, the plurality of optical sensors 2 are disposed so that the predetermined coordinate systems that are respectively set in the plurality of optical sensors 2a, 2b and 2c have angles different from each other with respect to a coordinate system in a control center 10 which is the reference position. Note that a coordinate system of the control center 10 is defined as an x-y coordinate system, a predetermined coordinate system set in the optical sensor 2a is defined as an x1-y1 coordinate system, a predetermined coordinate system set in the optical sensor 2b is defined as an x2-y2 coordinate system, and a predetermined coordinate system set in the optical sensor 2c is defined as an x3-y3 coordinate system.

The xl-yl coordinate system of the optical sensor 2a has an angle of θ1 with respect to the x-y coordinate system of the control center 10. The x2-y2 coordinate system of the optical sensor 2b has an angle of θ2 with respect to the x-y coordinate system of the control center 10. The x3-y3 coordinate system of the optical sensor 2c has an angle of θ3 with respect to the x-y coordinate system of the control center 10. The angles of θ1, θ2, and θ3 are angles different from each other.

The coordinate center of the x1-y1 coordinate system of the optical sensor 2a is located a distance R1 away from the control center 10. The coordinate center of the x2-y2 coordinate system of the optical sensor 2b is located a distance R2 away from the control center 10. The coordinate center of the x3-y3 coordinate system of the optical sensor 2c is located a distance R3 away from the control center 10. The further the coordinate center of the predetermined coordinate system of the optical sensor 2 is located from the control center 10, the higher the sensitivity of the optical sensor 2 becomes.

Next, a method for detecting a moving amount of the moving body in a coordinate system of the reference position will be described. Note that in the following descriptions, as appropriate, a configuration of the moving body 1 will be described with reference to Fig. 1, and an arrangement of the plurality of optical sensors 2 will be described with reference to Fig. 2

The arithmetic processing unit 4 repeatedly performs arithmetic processing of converting the moving amount of the moving body in each of the plurality of optical sensors 2 in the predetermined coordinate systems respectively set therein into the moving amount of the moving body in the coordinate system of the reference position and integrating the converted moving amount. In such a manner, the arithmetic processing unit 4 detects the moving amount of the moving body in the coordinate system of the reference position.

A moving amount $\Delta P_{sen}$ in the predetermined coordinate system of the optical sensors 2 is expressed as the Expression (1) by using a matrix M determined by a moving amount $\Delta P_{odom}$ of the control center and a geometric arrangement of the optical sensors 2.

$$\Delta P_{sen} = M \Delta P_{odom} \quad (1)$$

As shown in Fig. 2, when the plurality of optical sensors 2 are three optical sensors 2a, 2b, and 2c, the Expression (1) is expressed as the Expression (2). That is, in the Expression (2), a matrix on the left side is $\Delta P_{sen}$, a matrix of a first item on the right side is M, and a matrix of a second item on the right side is $\Delta P_{odom}$. Note that $\Delta x_1$ and $\Delta y_1$ are respectively moving amounts in the x1 and y1 coordinates of the optical sensor 2a, $\Delta x_2$ and $\Delta y_2$ are respectively moving amounts in the x2 and y2 coordinates of the optical sensor 2b, and $\Delta x_3$ and $\Delta y_3$ are respectively moving amounts in the x3 and y3 coordinates of the optical sensor 2c. $\Delta x_{odom}$, $\Delta y_{odom}$, and $\Delta \theta_{odom}$ are respectively moving amounts in the x, y, and $\theta$ coordinates of the control center.

[Expression 1]

$$\begin{bmatrix} \Delta x_1 \\ \Delta y_1 \\ \Delta x_2 \\ \Delta y_2 \\ \Delta x_3 \\ \Delta y_3 \end{bmatrix} = \begin{bmatrix} \cos\theta_1 & \sin\theta_1 & R_1 \\ -\sin\theta_1 & \cos\theta_1 & 0 \\ \cos\theta_2 & \sin\theta_2 & R_2 \\ -\sin\theta_2 & \cos\theta_2 & 0 \\ \cos\theta_3 & \sin\theta_3 & R_3 \\ -\sin\theta_3 & \cos\theta_3 & 0 \end{bmatrix} \begin{bmatrix} \Delta x_{odom} \\ \Delta y_{odom} \\ \Delta \theta_{odom} \end{bmatrix} \quad (2)$$

$\Delta P_{odom}$ is expressed as the Expression (4) by using a pseudo inverse matrix $M_{inv}$ of the matrix M expressed by the Expression (3).

[Expression 2]

$$M_{inv} = \left(M^T M\right)^{-1} M^T \quad (3)$$

$$\Delta P_{odom} = M_{inv} \Delta P_{sen} \quad (4)$$

The moving amount $\Delta P_{odom}$ of the control center obtained from the Expression (4) is integrated as shown in the Expression (5), and thereby the current position of the moving body 1 can be calculated. Note that $x_{odomn}$, $y_{odomn}$, and $\theta_{odomn}$ are the coordinates of the current positions which are currently calculated, and $x_{odomo}$, $y_{odomo}$, and $\theta_{odomo}$ are the coordinates of the current positions which were calculated in the previous time.

[Expression 3]

$$\begin{bmatrix} x_{odomn} \\ y_{odomn} \\ \theta_{odomn} \end{bmatrix} = \begin{bmatrix} x_{odomo} \\ y_{odomo} \\ \theta_{odomo} \end{bmatrix} + \begin{bmatrix} \cos\theta_{odom} & -\sin\theta_{odom} & 0 \\ \sin\theta_{odom} & \cos\theta_{odom} & 0 \\ 0 & 0 & 1 \end{bmatrix} \begin{bmatrix} \Delta x_{odom} \\ \Delta y_{odom} \\ \Delta \theta_{odom} \end{bmatrix} \quad (5)$$

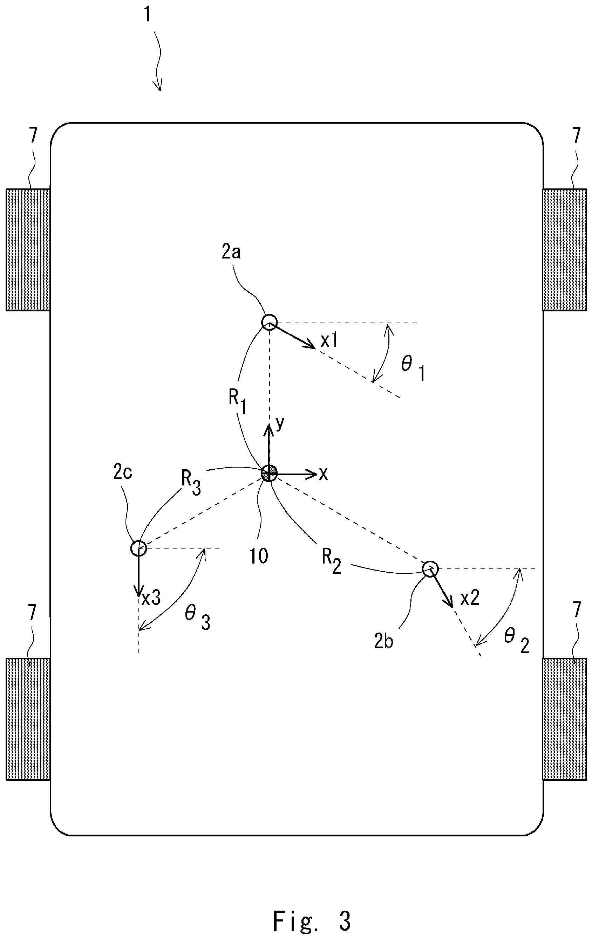

Fig. 3 is schematic diagram showing an example in which in the case where the plurality of optical sensors 2a, 2b, and 2c are one-axial sensors that detect a moving amount in one coordinate axis direction, the arrangement of each of the optical sensors is the same as the arrangement (Fig. 2) in the case where the plurality of optical sensors 2 are two-axial sensors.

Even in the case shown in Fig. 3, the plurality of optical sensors 2 (optical sensors 2a, 2b, and 2c) are disposed so that three or more of them are not arranged on the same straight line in a top view of the moving body 1. That is, all the optical sensors 2a, 2b, and 2c are disposed so as not to be arranged on the same straight line. Further, the plurality of optical sensors 2 are disposed so that the predetermined coordinate systems respectively set in the plurality of optical sensors 2a, 2b and 2c have angles different from each other with respect to a coordinate system in a control center 10 which is the reference position.

Note that a coordinate system of the control center 10 is defined as an x-y coordinate system, a predetermined coordinate system set in the optical sensor 2a is defined as an x1 coordinate system, a predetermined coordinate system set in the optical sensor 2b is defined as an x2 coordinate system, and a predetermined coordinate system set in the optical sensor 2c is defined as an x3 coordinate system. The x1 coordinate system of the optical sensor 2a has an angle of $\theta 1$ with respect to the x coordinate system of the control center 10. The x2 coordinate system of the optical sensor 2b has an angle of $\theta 2$ with respect to the x coordinate system of the control center 10. The x3 coordinate system of the optical sensor 2c has an angle of $\theta 3$ with respect to the x coordinate system of the control center 10. The angles of $\theta 1$, $\theta 2$, and $\theta 3$ are angles different from each other.

As shown in Fig. 3, when three of the optical sensors 2a, 2b, and 2c are one-axial sensors, the Expression (1) is expressed as the Expression (6). Note that $\Delta x_1$ is a moving amount in the x1 coordinate of the optical sensor 2a, $\Delta x_2$ is a moving amount in the x2 coordinate of the optical sensor 2b, and $\Delta x_3$ is a moving amount in the x3 coordinate of the optical sensor 2c. $\Delta x_{odom}$, $\Delta y_{odom}$, and $\Delta\theta_{odom}$ are respectively moving amounts in the x, y, and $\theta$ coordinates of the control center.

[Expression 4]

$$\begin{bmatrix} \Delta x_1 \\ \Delta x_2 \\ \Delta x_3 \end{bmatrix} = \begin{bmatrix} \cos\theta_1 & \sin\theta_1 & R_1 \\ \cos\theta_2 & \sin\theta_2 & R_2 \\ \cos\theta_3 & \sin\theta_3 & R_3 \end{bmatrix} \begin{bmatrix} \Delta x_{odom} \\ \Delta y_{odom} \\ \Delta\theta_{odom} \end{bmatrix} \qquad (6)$$

In the Expressions (3) to (5), when the matrix on the left side of the Expression (6) is defined as $\Delta P_{sen}$, and the matrix of the second item on the right side is defined as $\Delta P_{odom}$, the current position of the moving body 1 can be calculated in a manner similar to that in the case where the optical sensors are two-axial sensors.

Here, a problem regarding an arrangement position of the plurality of optical sensors 2 in comparative examples 1 to 3, and an effect of an arrangement position of the plurality of optical sensors 2 in the moving body 1 according to this embodiment which has been described with reference to Fig .2 will be described.

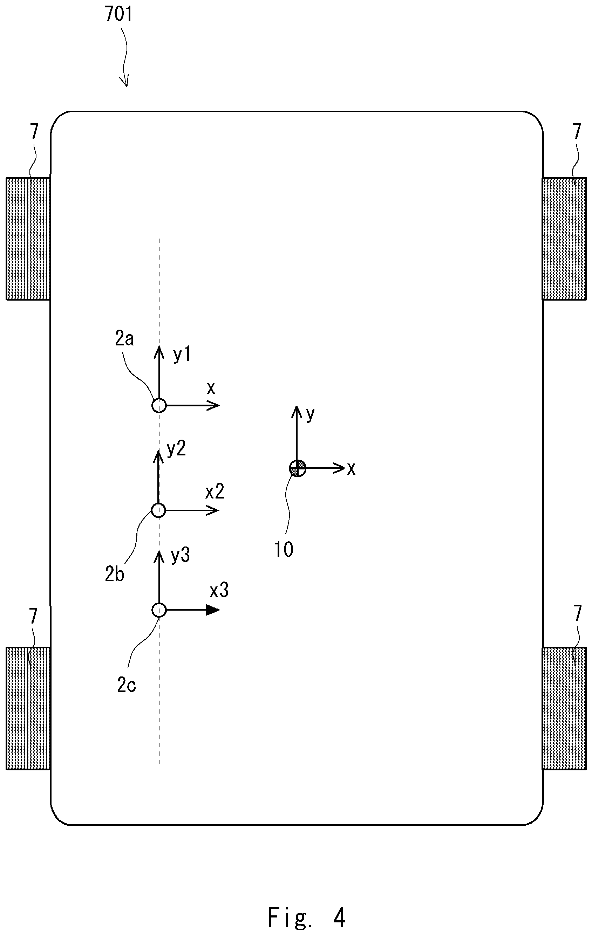

Fig. 4 shows an arrangement of the plurality of optical sensors 2 in a moving body 701 of a comparative example 1. As shown in Fig. 4, three optical sensors 2a, 2b, and 2c are arranged on the same straight line in the moving body 701 in a top view thereof. Further, the predetermined coordinate systems respectively set in the plurality of optical sensors 2 are disposed in a manner similar to that in which the coordinate system is set in the control center which is the reference position. That is, the directions of the x1-y1 coordinate system set in the optical sensor 2a, the x2-y2 coordinate system set in the optical sensor 2b, and the x3-y3 coordinate system set in the optical sensor 2c are respectively the same direction as that of the x-y coordinate system of the control center 10. When the plurality of optical sensors 2 are disposed in such a manner, variations in sensitivity among the plurality of optical sensors increases with respect to both translational and rotational movements.

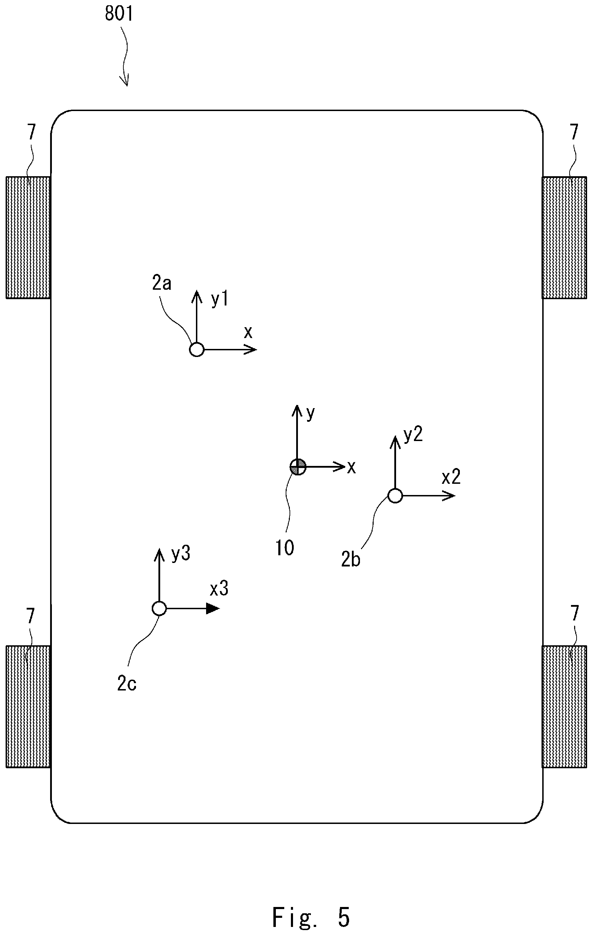

Fig. 5 shows an arrangement of the plurality of optical sensors 2 in a moving body 801 of a comparative example 2. As shown in Fig. 5, three optical sensors 2a, 2b, and 2c are disposed so as not to be arranged on the same straight line in the moving body 801 in a top view thereof. Therefore, with respect to a translational movement, variations in sensitivity among the plurality of optical sensors can be suppressed. However, the directions of the x1-y1 coordinate system set in the optical sensor 2a, the x2-y2 coordinate system set in the optical sensor 2b, and the x3-y3 coordinate system set in the optical sensor 2c are respectively the same as that of the x-y coordinate system of the control center 10. Therefore, with respect to a rotational movement, variations in sensitivity among the plurality of optical sensors increases.

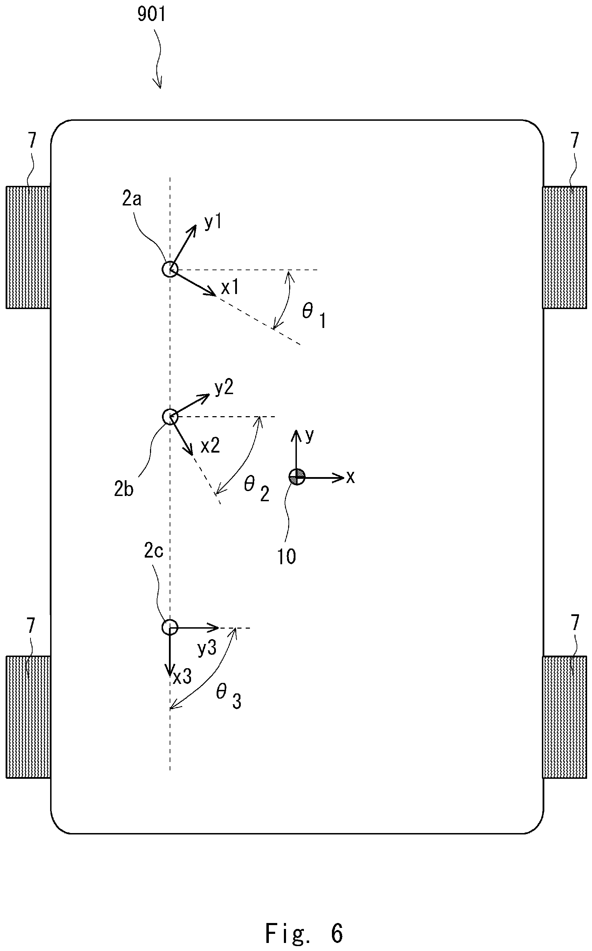

Fig. 6 shows an arrangement of the plurality of optical sensors 2 in a moving body 901 of a comparative example 3. As shown in Fig. 6, the predetermined coordinate systems respectively set in the plurality of optical sensors 2a, 2b, and 2c are disposed so as to have angels different from each other with respect to the coordinate system in the control center as the reference position. That is, the x1-y1 coordinate system set in the optical sensor 2a, the x2-y2 coordinate system set in the optical sensor 2b, and the x3-y3 coordinate system set in the optical sensor 2c are disposed so as to have angels θ1, θ2, and θ3 which are different from each other with respect to the x-y coordinate system of the control center 10. Therefore, with respect to a rotational movement, variations in sensitivity among the plurality of optical sensors can be suppressed. However, three optical sensors 2a, 2b, and 2c are arranged on the same straight line in the moving body 901 in a top view thereof. Therefore, with respect to a translational movement, variations in sensitivity among the plurality of optical sensors increase.

In contrast to the comparative examples 1 to 3, as shown in Fig. 2, three optical sensors 2a, 2b, and 2c are disposed so as not to be arranged on the same straight line in the moving body 1 according to this embodiment in a top view of the moving body 1. Therefore, with respect to a translational movement, variations in sensitivity among the plurality of optical sensors can be suppressed. Further, the predetermined coordinate systems respectively set in the plurality of optical sensors 2 are disposed so as to have angels different from each other with respect to the coordinate system in the control center as the reference position. That is, the x1-y1 coordinate system set in the optical sensor 2a, the x2-y2 coordinate system set in the optical sensor 2b, and the x3-y3 coordinate system set in the optical sensor 2c are disposed so as to have angels θ1, θ2, and θ3 which are different from each other with respect to the x-y coordinate system of the control center 10. Therefore, with respect to a rotational movement, variations in sensitivity among the plurality of optical sensors can be suppressed. Accordingly, in the moving body 1 according to this embodiment, variations in sensitivity among the plurality of optical sensors can be thereby suppressed with respect to both translational and rotational movements.

[Modified Example 1]

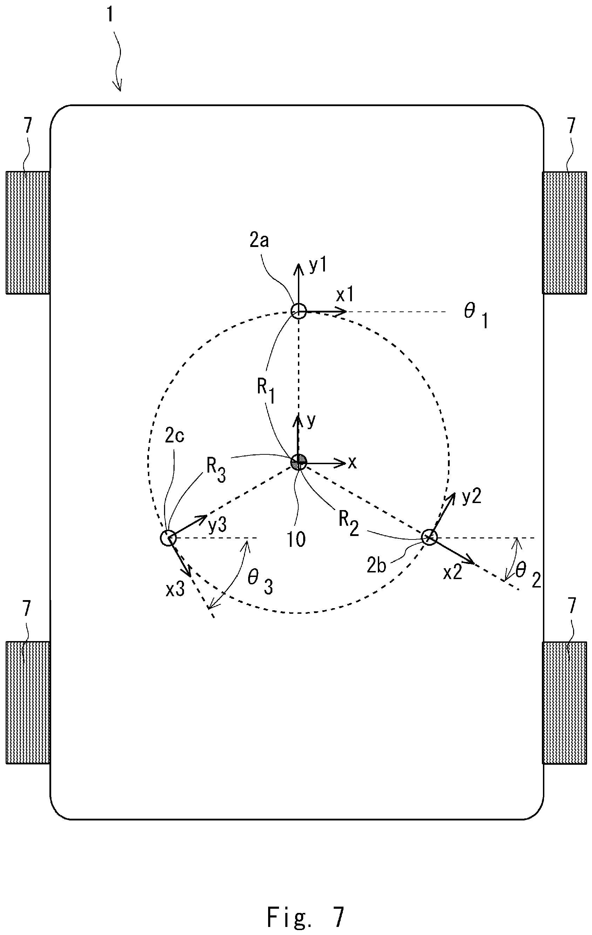

Fig. 7 is schematic diagram showing an example (a modified example 1) which is different from Fig. 2 of an arrangement of the plurality of optical sensors 2 in the moving body 1. As shown in Fig. 7, in the arrangement of the plurality of optical sensors 2 according to the modified example 1, the plurality of optical sensors 2a, 2b, and 2c are disposed on the same circumference in which the coordinate centers of predetermined coordinate systems respectively set in the optical sensors are centered around the control center 10 as the reference position (R1=R2=R3). Further, the plurality of optical sensors 2a, 2b and 2c are disposed so that angles formed by the predetermined coordinate systems respectively set in the plurality of optical sensors and the x-y coordinate system in the control center 10 as the reference position are shifted by an angle 30° (90°/3=30°) obtained by dividing 90° by the number of the plurality of optical sensors. The angles formed by the predetermined coordinate systems respectively set in the plurality of optical sensors and the x-y coordinate system in the control center 10 are an angle θ1=0 in the x1-y1 coordinate system set in the optical sensor 2a, an angle θ2=-30° in the x2-y2 coordinate system set in the optical sensor 2b, and an angle θ3=-60° in the x3-y3 coordinate system set in the optical sensor 2c.

As described above, the further the plurality of optical sensors 2a, 2b, and 2c are located from the control center 10 as the reference position, the higher the sensitivity thereof becomes. That is, sensitivity of the plurality of optical sensors 2a, 2b, and 2c depends on a distance of them from the control center 10 as the reference position. When the plurality of optical sensors 2 are disposed on the same circumference in which the coordinate centers of the predetermined coordinate systems respectively set in the optical sensors are centered around the control center 10 as the reference position, the sensitivity of each of the optical sensors can be uniform. Further, when the plurality of optical sensors 2 are disposed so that angles formed by the predetermined coordinate systems respectively set in the plurality of optical sensors and the x-y coordinate system in the control center 10 as the reference position are shifted by an angle obtained by dividing 90° by the number of the plurality of optical sensors, variations in sensitivity in a rotational movement can be suppressed.

[Modified Example 2]

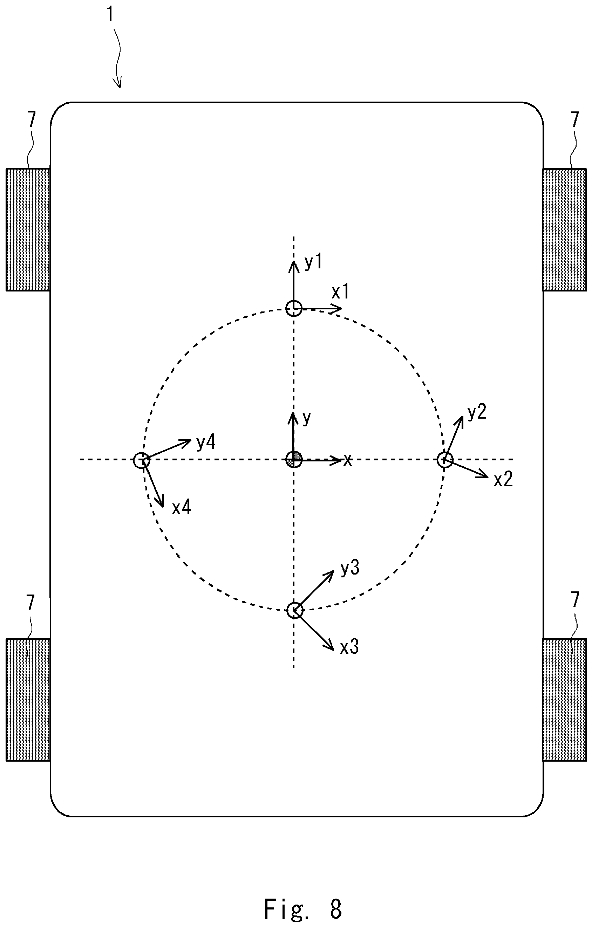

Four or more optical sensors 2 may be disposed. Fig. 8 is a schematic diagram showing an example (a modified example 2) of an arrangement in the case where the number of a plurality of optical sensors in the moving body is four. As shown in Fig. 8, the plurality of optical sensors 2 (optical sensors 2a, 2b, 2c and 2d) are disposed so that three or more of them are not arranged on the same straight line in a top view of the moving body 1.

Further, the plurality of optical sensors 2 are disposed so that the predetermined coordinate systems that are respectively set in the plurality of optical sensors 2a, 2b, 2c and 2d have angles different from each other with respect to the coordinate system in the control center 10 which is the reference position. Note that a coordinate system of the control center 10 is defined as an x-y coordinate system, a predetermined coordinate system set in the optical sensor 2a is defined as an x1-y1 coordinate system, a predetermined coordinate system set in the optical sensor 2b is defined as an x2-y2 coordinate system, a predetermined coordinate system set in the optical sensor 2c is defined as an x3-y3 coordinate system, and a predetermined coordinate system set in the optical sensor 2d is defined as an x4-y4 coordinate system.

The x1-y1 coordinate system of the optical sensor 2a has an angle of $\theta 1$ with respect to the x-y coordinate system of the control center 10. The x2-y2 coordinate system of the optical sensor 2b has an angle of $\theta 2$ with respect to the x-y coordinate system of the control center 10. The x3-y3 coordinate system of the optical sensor 2c has an angle of $\theta 3$ with respect to the x-y coordinate system of the control center 10. The x4-y4 coordinate system of the optical sensor 2d has an angle of $\theta 4$ with respect to the x-y coordinate system of the control center 10. The angles of $\theta 1$, $\theta 2$, $\theta 3$, and $\theta 4$ are angles different from each other.

Even when four or more optical sensors 2 are disposed, variations in sensitivity among the plurality of optical sensors can be suppressed with respect to both translational and rotational movements by arranging the plurality of optical sensors 2 as described above.

Note that the present disclosure is not limited to the above-described embodiments, and various modifications can be made without departing from the spirit of the present disclosure. For example, even in the case where four or more optical sensors 2 are disposed, which is described with reference to the modified example 2, the optical sensors 2 can be disposed in the same manner as that in which the optical sensors 2 are disposed in the modified example 1. That is, the plurality of optical sensors are disposed on the same circumference in which the coordinate centers of the predetermined coordinate systems respectively set in the optical sensors are centered around the control center 10 as the reference position. Further, the plurality of optical sensors are disposed so that angles formed by the predetermined coordinate systems respectively set in the plurality of optical sensors and the x-y coordinate system in the control center as the reference position are shifted by an angle obtained by dividing 90° by the number of the plurality of optical sensors.

**Claims**

1. A moving amount detection device configured to be incorporated in a moving body (1), comprising:

   a plurality of at least three optical sensors (2) having a light source for irradiating a floor surface where the moving body (1) is located, the plurality of optical sensors (2) acquiring image data of the floor surface;

   a moving amount acquisition unit (3) configured to acquire a moving amount of the moving body (1) in a one-axial or two-axial predetermined coordinate system by using the image data acquired from the optical sensors (2); and an arithmetic processing unit (4) configured to detect the moving amount of the moving body (1) in a coordinate system of a reference position on the moving body (1) by performing arithmetic processing using the moving amount of the moving body (1) in the predetermined coordinate systems in each of the plurality of optical sensors (2) acquired by the moving amount acquisition unit (3), wherein

   the plurality of optical sensors (2) are disposed so that three or more of them are not arranged on the same straight line in a top view of the moving body (1) and the predetermined coordinate systems that are respectively set in the plurality of optical sensors (2) have angles different from each other with respect to the coordinate system in the reference position, and the arithmetic processing unit (4) is configured to detect the moving amount of the moving body (1) in the coordinate system of the reference position by repeatedly performing arithmetic processing of converting the moving amount of the moving body (1) in each of the plurality of optical sensors (2) in the predetermined coordinate systems that are respectively set in the plurality of optical sensors (2) into the moving amount of the moving body (1) in the coordinate system of the reference position and integrating the converted moving amount, wherein the plurality of optical sensors (2) are disposed on a circumference in which the coordinate center of the predetermined coordinate systems that are respectively set in the plurality of optical sensors (2) are centered around the reference position, **characterized in that** the plurality of optical sensors (2) are disposed so that angles formed by the predetermined coordinate systems respectively set in the plurality of optical sensors and the coordinate system in the reference position are shifted by an angle obtained by dividing 90° by the number of the plurality of optical sensors (2).

2. The moving amount detection device according to Claim 1, further comprising a control unit (5) configured to control so as to reduce a displacement amount between a current position of the moving body (1) calculated by using a moving amount of the reference position in the arithmetic processing unit (4) and a point closest to the current position on a planned moving path of the moving body (1), the planned moving path being planned in advance.

**Patentansprüche**

1.  Erfassungsvorrichtung für Bewegungsbeträge, die konfiguriert ist, um in einem beweglichen Körper (1) eingebaut zu sein, mit:

    einer Mehrzahl von zumindest drei optischen Sensoren (2) mit einer Lichtquelle zum Bestrahlen einer Bodenfläche, auf der sich der bewegliche Körper (1) befindet, wobei die Mehrzahl von optischen Sensoren (2) Bilddaten der Bodenfläche bezieht;
    einer Erfassungseinheit für Bewegungsbeträge (3), die konfiguriert ist, um einen Bewegungsbetrag des beweglichen Körpers (1) in einem einachsigen oder zweiachsigen vorgegebenen Koordinatensystem durch Verwendung der von den optischen Sensoren (2) bezogenen Bilddaten zu beziehen; und
    einer arithmetische Verarbeitungseinheit (4), die konfiguriert ist, um den Bewegungsbetrag des beweglichen Körpers (1) in einem Koordinatensystem einer Referenzposition auf dem beweglichen Körper (1) zu erfassen, indem eine arithmetische Verarbeitung durch Verwendung des Bewegungsbetrags des beweglichen Körpers (1), der von der Erfassungseinheit für Bewegungsbeträge (3) bezogen wird, in den vorgegebenen Koordinatensystemen in jedem der Mehrzahl von optischen Sensoren (2) durchgeführt wird, wobei
    die Mehrzahl von optischen Sensoren (2) so angeordnet sind, dass drei oder mehr von diesen in einer Draufsicht auf den beweglichen Körper (1) nicht auf derselben geraden Linie angeordnet sind und die vorgegebenen Koordinatensysteme, die jeweils in der Mehrzahl von optischen Sensoren (2) festgelegt sind, Winkel aufweisen, die sich in Bezug auf das Koordinatensystem in der Referenzposition voneinander unterscheiden, und
    die arithmetische Verarbeitungseinheit (4) konfiguriert ist, um den Bewegungsbetrag des beweglichen Körpers (1) in dem Koordinatensystem der Referenzposition zu erfassen, indem diese wiederholt eine arithmetische Verarbeitung des Umwandelns des Bewegungsbetrags des beweglichen Körpers (1) in jedem der Mehrzahl von optischen Sensoren (2) in den vorgegebenen Koordinatensystemen, die jeweils in der Mehrzahl von optischen Sensoren (2) festgelegt sind, in den Bewegungsbetrag des beweglichen Körpers (1) in dem Koordinatensystem der Referenzposition durchführt und den umgewandelten Bewegungsbetrag integriert, wobei
    die Mehrzahl von optischen Sensoren (2) auf einem Umfang angeordnet sind, in dem das Koordinatenzentrum der vorgegebenen Koordinatensysteme, die jeweils in der Mehrzahl von optischen Sensoren (2) festgelegt sind, um die Referenzposition zentriert sind, **dadurch gekennzeichnet, dass**
    die Mehrzahl von optischen Sensoren (2) so angeordnet sind, dass Winkel, die durch die vorgegebenen Koordinatensysteme, die jeweils in der Mehrzahl von optischen Sensoren festgelegt sind, und dem Koordinatensystem in der Referenzposition ausgebildet werden, um einen Winkel verschoben sind, der durch Teilen von 90° durch die Anzahl der Mehrzahl von optischen Sensoren (2) erhalten wird.

2.  Erfassungsvorrichtung für Bewegungsbeträge nach Anspruch 1, des Weiteren mit einer Steuereinheit (5), die konfiguriert ist, das diese derart steuert, dass ein Verschiebungsbetrag zwischen einer aktuellen Position des beweglichen Körpers (1), die durch Verwendung eines Bewegungsbetrags der Referenzposition in der arithmetischen Verarbeitungseinheit (4) berechnet wird, und einem Punkt, welcher der aktuellen Position auf einem geplanten Bewegungspfad des beweglichen Körpers (1) am nächsten liegt, reduziert wird, wobei der geplante Bewegungspfad im Voraus geplant wird.

**Revendications**

1.  Dispositif de détection de quantité de déplacement configuré pour être incorporé dans un corps mobile (1), comprenant :

    une pluralité de au moins trois capteurs optiques (2) ayant une source de lumière pour irradier une surface de sol où le corps mobile (1) se trouve, la pluralité de capteurs optiques (2) acquérant des données d'image de la surface de sol ;
    une unité d'acquisition de quantité de déplacement (3) configurée pour acquérir une quantité de déplacement du corps mobile (1) dans un système de coordonnées prédéterminé mono-axial ou bi-axial en utilisant les données d'image acquises à partir des capteurs optiques (2) ; et
    une unité de traitement arithmétique (4) configurée pour détecter la quantité de déplacement du corps mobile (1) dans un système de coordonnées d'une position de référence sur le corps mobile (1) en réalisant un traitement arithmétique utilisant la quantité de déplacement du corps mobile (1) dans les systèmes de coordonnées prédéterminés dans chaque capteur de la pluralité de capteurs optiques (2) acquise par l'unité d'acquisition de quantité de déplacement (3),

la pluralité de capteurs optiques (2) étant disposée de telle sorte que trois d'entre eux ou plus ne sont pas disposés sur la même ligne droite dans une vue de dessus du corps mobile (1) et les systèmes de coordonnées prédéterminés qui sont prévus de manière respective dans la pluralité de capteurs optiques (2) ayant des angles différents l'un de l'autre par rapport au système de coordonnées dans la position de référence, et

l'unité de traitement arithmétique (4) étant configurée pour détecter la quantité de déplacement du corps mobile (1) dans le système de coordonnées de la position de référence en réalisant de manière répétée un traitement arithmétique destiné à convertir la quantité de déplacement du corps mobile (1) dans chaque capteur de la pluralité de capteurs optiques (2) dans les systèmes de coordonnées prédéterminés qui sont respectivement prévus dans la pluralité de capteurs optiques (2) en la quantité de déplacement du corps mobile (1) dans le système de coordonnées de la position de référence et en intégrant la quantité de déplacement convertie,

la pluralité de capteurs optiques (2) étant disposée sur une circonférence dans laquelle le centre de coordonnées des systèmes de coordonnées prédéterminés qui sont respectivement prévus dans la pluralité de capteurs optiques (2) est centré sur la position de référence, **caractérisé en ce que** la pluralité de capteurs optiques (2) est disposée de telle sorte que des angles formés par les systèmes de coordonnées prédéterminés respectivement prévus dans la pluralité de capteurs optiques et le système de coordonnées dans la position de référence sont décalés d'un angle obtenu en divisant 90° par le nombre de la pluralité de capteurs optiques (2).

2. Dispositif de détection de quantité de déplacement selon la revendication 1, comprenant en outre une unité de commande (5) configurée pour commander de façon à réduire une quantité de déplacement entre une position courante du corps mobile (1) calculée en utilisant une quantité de déplacement de la position de référence dans l'unité de traitement arithmétique (4) et un point le plus proche de la position courante sur une trajectoire de déplacement planifiée du corps mobile (1), la trajectoire de déplacement planifiée étant planifiée à l'avance.

Fig. 1

Fig. 2

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015187798 A
- JP H4151715 B
- US 2006158424 A1
- US 8768558 B2
- US 9744670 B2